# EUROPÄISCHE PATENTSCHRIFT

(11) **EP 1 386 768 B1**
(45) Veröffentlichungstag und Bekanntmachung des Hinweises auf die Patenterteilung: **21.03.2012**
(21) Anmeldenummer: 03013528.9
(22) Anmeldetag: 13.06.2003
(51) Int. Cl.: B60J 7/20

(54) **Verdeckkasten zur Aufnahme eines Falt- oder Klappverdecks von Cabriolets, Roadstern oder dergleichen**
Storage compartment for housing a soft top of a Cabriolet, Roadster or similar
Compartiment de stockage pour accueillir une capote de cabriolet, roadster ou véhicule similaire

(30) Priorität: 27.06.2002 DE 20209924 U
(43) Veröffentlichungstag der Anmeldung: 04.02.2004
(73) Patentinhaber: Wilhelm Karmann GmbH, 49084 Osnabrück (DE)
(72) Erfinder: van Berkum, Wim, 49179 Ostercappeln (DE)
(74) Vertreter: Kronthaler, Schmidt & Coll.

(56) Entgegenhaltungen:
- EP-A- 0 860 312
- DE-C- 19 542 906
- DE-C- 19 636 027
- US-A- 5 649 733
- US-B1- 6 315 349

## Beschreibung

Die vorliegende Erfindung betrifft einen Verdeckkasten zur Aufnahme eines Falt- oder Klappverdecks von Cabriolets, Roadstern oder dergleichen, welcher eine Trennvorrichtung, die einen Zusatzraum zumindest bereichsweise abgrenzt, und eine Überführeinrichtung aufweist, mittels derer die Trennvorrichtung zwischen einer Verdeckaufnahmestellung, in der der Verdeckkasten um den Zusatzraum vergrößert ist, und einer Gepäckaufnahmestellung, in der der Zusatzraum einen Teil eines Kofferraums ausbildet, bewegbar ist, wobei die Trennvorrichtung eine biegeschlaffe, aber zugfeste Materialbahn umfaßt, deren quer zur Fahrtrichtung F verlaufenden vorderen und hinteren Enden ortsfest befestigt sind.

Die DE 195 42 906 C1 offenbart einen Verdeckkasten zur Aufnahme eines Falt- oder Klappverdecks von Cabriolets, Roadsters oder dergleichen, welche eine Trennvorrichtung und Stoffwand, die einen Zusatzraum zumindest bereichsweise abgrenzt, und eine Überführeinrichtung aufweist, mittels derer die Trennvorrichtung zwischen einer Verdeckaufnahmestellung, in der der Verdeckkasten um den Zusatzraum vergrößert ist, und einer Gepäckaufnahmestellung, in der der Zusatzraum einen Teil eines Kofferraums ausbildet, bewegbar ist, wobei die Trennvorrichtung eine biegeschlaffe, aber zugfeste Materialbahn umfasst, deren quer zur Fahrtrichtung F verlaufenden hinteren Enden ortsfest befestigt sind.

Ein Verdeckkasten der eingangsgenannten Art ist aus der DE 101 38 669 A1 bekannt. Zur Überführung der Materialbahn zwischen einer oberen Gepäckaufnahmestellung und einer unteren Verdeckaufnahmestellung wird eine Hubeinrichtung eingesetzt, die eine Scherenmechanik oder einen Schwenkhebel umfaßt. Der Schwenkhebel besitzt dabei an seinem der Drehachse abgewandten Ende ein quer zur Fahrtrichtung verlaufendes Spriegelpaar, wobei durch den Spalt derselbigen eine Materialbahn durchgeführt ist. Da der Schwenkhebel einen Raum außerhalb des eigentlichen Verdeckkastens durchläuft, wird dadurch der Nutzraum der Karosserie eingeschränkt.

Weiterhin können bei dem bekannten Verdeckkasten in der Materialbahn während der Schwenkbewegung Überspannungen auftreten.

Außerdem ist die Scherenmechanik recht aufwendig und liefert sie keine definierte Position der Materialbahn, was zu einer losen Auflage führt.

Der Erfindung liegt somit die Aufgabe zugrunde, den gattungsgemäßen Verdeckkasten derart weiterzubilden, daß eine Einschränkung des Nutzraumes der Karosserie vermieden wird.

Erfindungsgemäß wird diese Aufgabe bei dem gattungsgemäßen Verdeckkasten dadurch gelöst, daß die Überführeinrichtung eine Spannrolle für die Materialbahn umfaßt, die derart gestaltet ist, daß sie im Zusatzraum zwischen einer (ersten) Position, in der sich die Materialbahn in der Verdeckaufnahmestellung befindet, und einer (zweiten) Position bewegbar ist, in der sich die Materialbahn in der Gepäckaufnahmestellung befindet.

Zweckmäßigerweise ist eine Führungseinrichtung zum Führen der Spannrolle zwischen der in Fahrtrichtung vorderen, oberen ersten Position und der in Fahrtrichtung hinteren, unteren zweiten Position vorgesehen.

Günstigerweise umfaßt die Führungseinrichtung zum Führen der Spannrolle zwei in Fahrtrichtung zu beiden Seiten angeordnete und parallel verlaufende Führungen für die Spannrolle.

Gemäß einer besonderen Ausführungsform der Erfindung kann vorgesehen sein, daß die Führungen geradlinig verlaufen.

Insbesondere kann dabei vorgesehen sein, daß die Führungen jeweils an deren in Fahrtrichtung hinterem Ende schwenkbar angeordnet sind.

Günstigerweise sind die Führungen mittels eines umlaufenden Bowdenzuges manuell, elektrisch oder hydraulisch schwenkbar.

In einer alternativen Ausführungsform der Erfindung kann vorgesehen sein, daß die Führungen einen gekrümmten Verlauf besitzen. Dies ist besonders vorteilhaft, wenn die Führungen im Bereich der abgelegten Verdeckteile, wie z. B. dem Verdeckstoffspannbügel, unter diesen hindurch verlaufen. Dann ist ein Schwenken der Führungen nicht mehr erforderlich.

Weiterhin kann vorgesehen sein, daß die Spannrolle aus zwei beabstandeten Profilen besteht und die Materialbahn durch den Spalt zwischen den Profilen hindurchgeführt ist.

Günstigerweise sind die Profile an deren Stirnseiten miteinander verbunden.

Desweiteren kann vorgesehen sein, daß die vorderen und hinteren Enden der Materialbahn jeweils über eine Halterolle an der Karosserie befestigt sind.

Günstigerweise sind die Halterollen in der Karosserie drehbar befestigt. Dies ermöglicht in beiden Stellungen der Trennvorrichtung stets eine optimale Lage der Materialbahn.

Günstigerweise bestehen die Spannrolle und die Halterollen aus identischen Profilen. Damit wird nämlich die Bauteilanzahl gesenkt, wodurch wiederum die Kosten gesenkt bzw. niedrig gehalten werden.

Insbesondere kann vorgesehen sein, daß die Profile Rohrabschnitte sind. Beispielsweise kann es sich bei den Rohrabschnitten um Halbrohre bzw. Drittelrohre handeln.

Schließlich kann vorgesehen sein, daß die Spannrolle mittels eines umlaufenden Bowdenzuges manuell, elektrisch oder hydraulisch antreibbar ist.

Der Erfindung liegt die überraschende Erkenntnis zugrunde, daß durch die Verwendung einer Spannrolle gemäß dem Kennzeichen des Anspruches 1 eine Bewegung des Spannmittels während des Einsatzes außerhalb des verstellbaren Verdeckaufnahmeraumes und damit eine Einschränkung des Nutzraumes der Karosserie vermieden wird.

Weiterhin ist mit der Verwendung der Spannrolle eine relativ einfache Bewegung verbunden, so daß die Baukosten niedrig gehalten werden.

Durch die Spannrolle läßt sich auch eine Überbeanspruchung der Materialbahn vermeiden. Dies ermöglicht wiederum die Verwendung von nichtelastischem und damit sehr festem und widerstandsfähigem Material für die Materialbahn.

Im übrigen hält die Verwendung von identischen Profilen für die Spannrolle und die Halterollen gemäß einer besonderen Ausführungsform der Erfindung die Baukosten niedrig.

Weitere Merkmale und Vorteile der Erfindung ergeben sich aus den Ansprüchen der nachstehenden Beschreibung, in der ein Ausführungsbeispiel anhand der schematischen Zeichnungen im einzelnen erläutert ist. Dabei zeigt:
- Figur 1: eine schematische Seitenansicht eines Fahrzeuges, z.B. eines Cabriolets, mit einem Verdeckkasten gemäß einer besonderen Ausführungsform der Erfindung;
- Figur 2a: eine Detailansicht des Verdeckkastens von Figur 1 mit in Verdeckaufnahmestellung sowie - gestrichelt eingezeichnet - in Gepäckaufnahmestellung befindlicher Trennvorrichtung;
- Figur 2b: eine Detailansicht des Verdeckkastens von Figur 1 mit zwischen Verdeck- und Gepäckaufnahmestellung sowie - gestrichelt eingezeichnet - in Gepäckaufnahmestellung befindlicher Trennvorrichtung;
- Figur 3: eine Detailansicht wie Figur 2a, wobei jedoch Führungen für eine Spannrollenach unten geschwenkt sind;
- Figur 4: eine Schnittansicht einer Spannrolle; und
- Figur 5: eine Schnittansicht einer Halterolle.

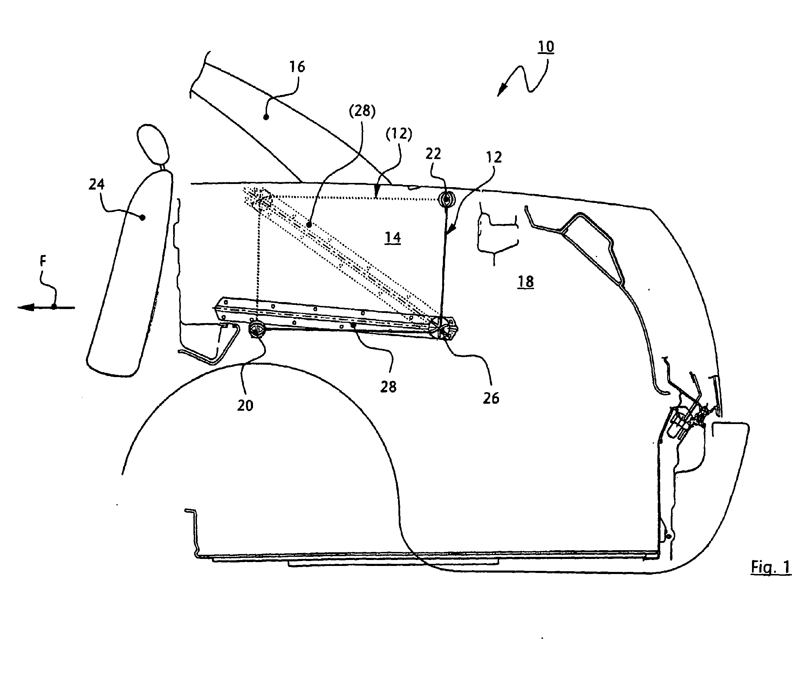

Das in der Figur 1 nur im in Fahrtrichtung F hinteren Bereich und auch nur unvollständig dargestellte Cabriolet 10 weist eine Trennvorrichtung 12 auf, die einen Verdeckkasten 14 zur Aufnahme eines Falt- oder Klappverdecks 16 von einem Kofferraum 18 abgrenzt. Die Trennvorrichtung 12 umfaßt eine biegeschlaffe, aber zugfeste Materialbahn, wie z. B. ein textiles Tuch, eine Plane oder ähnliches. Die in Fahrtrichtung F vorderen und hinteren Enden der Trennvorrichtung 12 sind jeweils über eine Halterolle 20 bzw. 22 drehbar an der Karosserie befestigt. Genauer gesagt ist die Halterolle 20 hinter den Fondsitzen, von denen nur einer zu sehen und mit dem Bezugzeichen 24 versehen ist, und ist die Halterolle 22 unterhalb der Karosserieaußenhaut, z. B. im Bereich eines Querträgers, ortsfest gelagert. Dadurch wird in beiden Stellungen (Verdeck- und Gepäckaufnahmestellung) der Trennvorrichtung 12 stets eine optimale Lage der Materialbahn erreicht.

Die Trennvorrichtung 12 ist durch eine Spannrolle 26 hindurchgeführt, deren Aufbau später erläutert wird. In den fahrzeugseitig seitlichen Bereichen befindet sich jeweils eine Führung, von der nur eine sichtbar und dem Bezugzeichen 28 versehen ist, in welcher die Spannrolle 26 zwischen einer oberen, den Kofferraum 18 vergrößernden (Gepäckaufnahmestellung), und einer unteren, den Verdeckkasten 14 vergrößernden Stellung (Verdeckaufnahmestellung) bewegt werden kann.

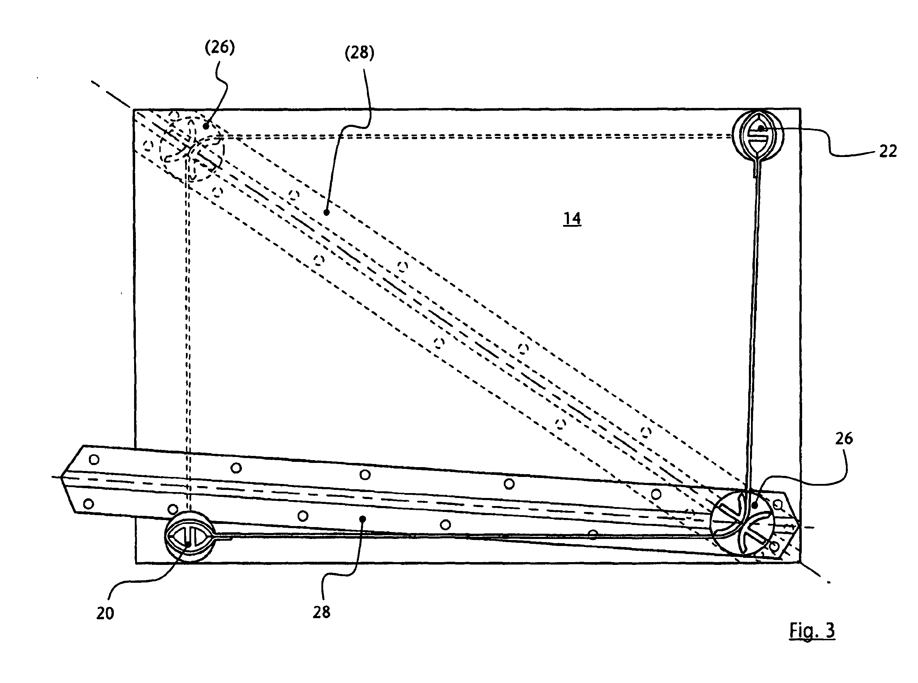

Damit das Falt- bzw. Klappverdeck 16 in der Verdeckaufnahmestellung der Trennvorrichtung 12 auch ohne Behinderung durch die geradlinig gestalteten Führungen 28 abgelegt werden kann, lassen sich die Führungen 28 aus dem Verdeckablagebereich nach unten schwenken (siehe Figur 3). Dabei werden sie um eine Achse an ihrem in Fahrtrichtung F hinteren Ende nach unten geschwenkt. Alternativ ist denkbar, daß die Führungen 28 nicht geradlinig verlaufen, sondern einen gekrümmten Verlauf besitzen, und zwar derart, daß die Führungsbahn im Bereich der abgelegten Verdeckteile, wie z. B. dem Verdeckstoffspannbügel, unter diesen hindurch verlaufen. Dann ist ein Schwenken der Führungsbahnen nicht erforderlich.

Die Spannrolle 26 wird vorzugsweise mit einem umlaufenden Bowdenzug (nicht gezeigt) angetrieben, der manuell, elektrisch oder hydraulisch betreibbar sein kann. Das Schwenken der Führungen 28 ist auf ähnliche Weise denkbar, wobei das Schwenken der Führung und das Antreiben der Spannrolle vorteilhafterweise mit der gleichen Antriebsart vorgenommen wird.

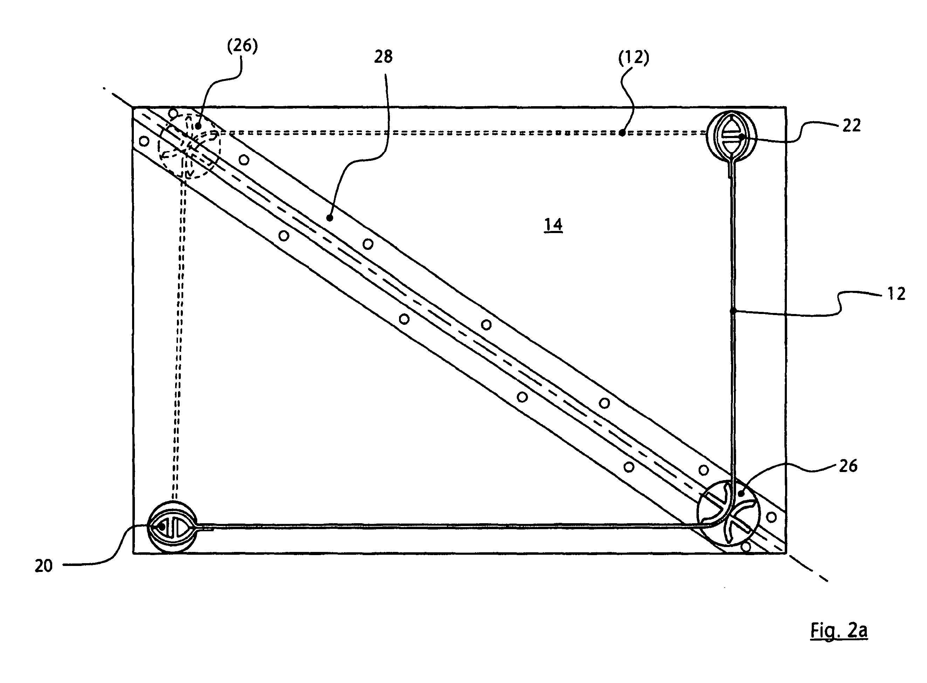

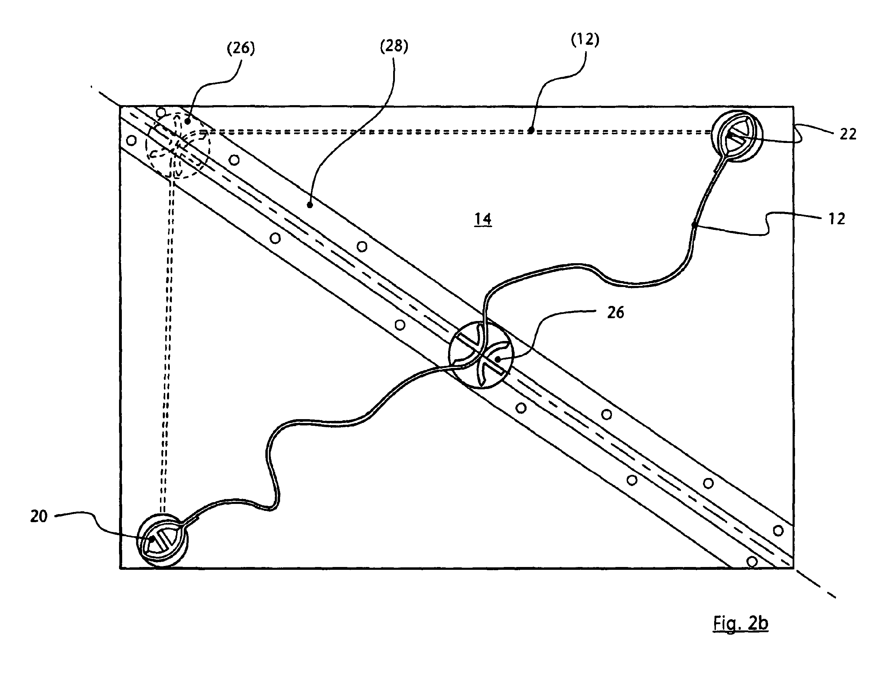

Die Figuren 2a und 2b zeigen, wie die Spannrolle 26 ausgehend von der Verdeckaufnahmestellung, in der die Trennvorrichtung 12 über die untere rechte Ecke gespannt ist, in die Gepäckaufnahmestellung, von dem Bowdenzug (nicht gezeigt) angetrieben und in den Führungen 28 geführt, gebracht wird. Es ist auch deutlich zu erkennen, wie sich die Halterollen 20 und 22 mitdrehen, so daß nachher die Trennvorrichtung 12 optimal über die obere linke Ecke geführt wird.

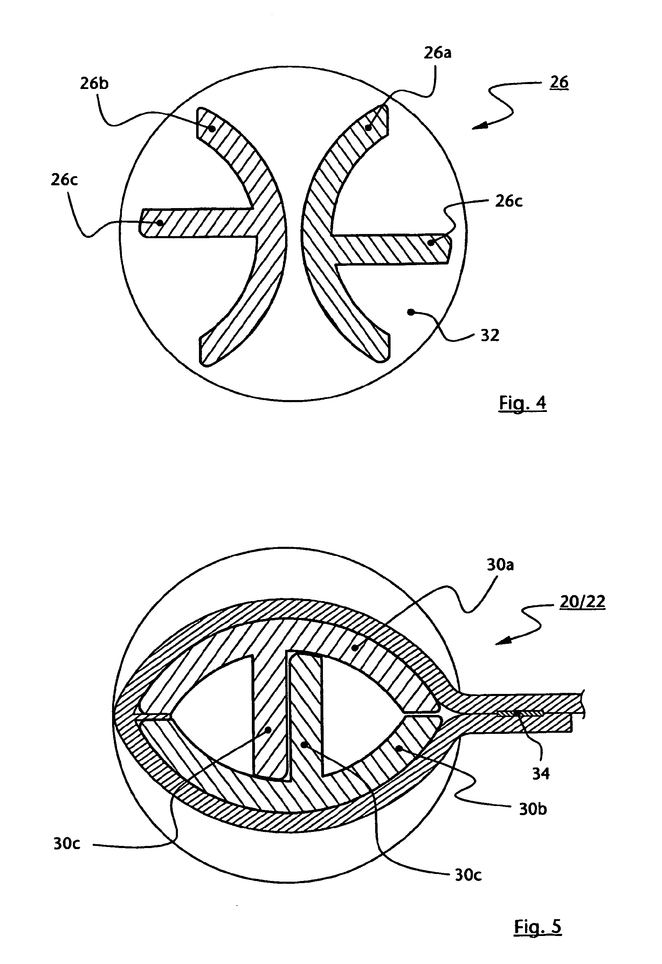

Wie sich aus den Figuren 4 und 5 ergibt, werden die Spannrolle 26 und die Halterollen 20 und 22 aus identischen Profilen 26a und 26b und 30a, 30b zusammengesetzt. Die Profile 26a, 26c und 30a, 30b weisen in etwa einen Halbrohrquerschnitt auf. Darüber hinaus besitzen die Profile 26a, 26b und 30a, 30b jeweils einen auf der Innenseite des Rohrabschnittes außermittig zur Symmetrielinie verlaufenden Steg 26c bzw. 30c.

Zur Bildung der Halterollen 20 und 22 werden zwei Profile 30a und 30b derart zusammengesetzt und verklebt, daß die Stege 30c zueinander weisen und zur Anlage kommen. Dabei bilden die Außenseiten der Profile 30a und 30b in etwa eine Ellipse. Die Ellipse wird von der Materialbahn der Trennvorrichtung 12 umschlungen, deren eines Ende mittels eines Klebestreifens 34 fixiert ist. Alternativ kann z. B. eine Ultraschallschweißung verwendet werden.

Zur Bildung der Spannrolle 26 werden die Profile 26a und 26b derart zusammengesetzt, daß die nach außen weisenden Rohrflächenabschnitte mit einem gewissen Abstand für den Durchgang der Trennvorrichtung 12 aneinander gegenüberliegen. Stirnseitig werden die beiden Profilhälften 26a und 26b über eine Aufnahmescheibe 32 verbunden. Durch die Verwendung von identischen Profilen 26a, 26b, 30a, 30b sowohl für die Spannrolle 26 als auch für die Halterollen 20 und 22 lassen sich die Anzahl der Bauteile und damit auch die Kosten senken bzw. niedrig halten.

## Patentansprüche

1. Verdeckkasten (14) zur Aufnahme eines Falt- oder Klappverdecks (16) von Cabriolets, Roadstern oder dergleichen, welcher eine Trennvorrichtung (12), die einen Zusatzraum zumindest bereichsweise abgrenzt, und eine Überführeinrichtung aufweist, mittels derer die Trennvorrichtung (12) zwischen einer Verdeckaufnahmestellung, in der der Verdeckkasten (14) um den Zusatzraum vergrößert ist, und einer Gepäckaufnahmestellung, in der der Zusatzraum einen Teil eines Kofferraums (18) ausbildet, bewegbar ist, wobei die Trennvorrichtung (12) eine biegeschlaffe, aber zugfeste Materialbahn umfaßt, deren quer zur Fahrtrichtung F verlaufenden vorderen und hinteren Enden ortsfest befestigt sind,
**dadurch gekennzeichnet, daß**
die Überführeinrichtung eine Spannrolle (26) für die Materialbahn und zwei in Fahrtrichtung F zu beiden Seiten angeordnete und parallel verlaufende Führungen (28) für die Spannrolle (26), in denen die Spannrolle (26) im Zusatzraum zwischen einer in Fahrtrichtung F vorderen oberen Position, in der sich die Materialbahn in der Verdeckaufnahmestellung befindet, und einer in Fahrtrichtung F hinteren unteren Position bewegbar ist, in der sich die Materialbahn in der Gepäckaufnahmestellung befindet, umfaßt.

2. Verdeckkasten nach Anspruch 1, **dadurch gekennzeichnet, daß** die Führungen (28) geradlinig verlaufen.

3. Verdeckkasten nach Anspruch 2, **dadurch gekennzeichnet, daß** die Führungen (28) jeweils an deren in Fahrtrichtung F hinterem Ende schwenkbar angeordnet sind.

4. Verdeckkasten nach Anspruch 3, **dadurch gekennzeichnet, daß** die Führungen (28) mittels eines umlaufenden Bowdenzuges manuell, elektrisch oder hydraulisch schwenkbar sind.

5. Verdeckkasten nach Anspruch 1, **dadurch gekennzeichnet, daß** die Führungen (28) einen gekrümmten Verlauf besitzen.

6. Verdeckkasten nach einem der vorangehenden Ansprüche, **dadurch gekennzeichnet, daß** die Spannrolle (26) aus zwei beabstandeten Profilen (26a, 26b) besteht und die Materialbahn durch den Spalt zwischen den Profilen (26a, 26b) hindurchgeführt ist.

7. Verdeckkasten nach Anspruch 6, **dadurch gekennzeichnet, daß** die Profile (26a, 26b) an deren Stirnseiten miteinander verbunden sind.

8. Verdeckkasten nach einem der vorangehenden Ansprüche, **dadurch gekennzeichnet, daß** die vorderen und hinteren Enden der Materialbahn jeweils über eine Halterolle (20, 22) an der Karosserie befestigt sind.

9. Verdeckkasten nach Anspruch 8, **dadurch gekennzeichnet, daß** die Halterollen (20, 22) an der Karosserie drehbar befestigt sind.

10. Verdeckkasten nach einem der vorangehenden Ansprüche 8-9, **dadurch gekennzeichnet, daß** die Spannrolle (26) und die Halterollen (20, 22) aus identischen Profilen (26a, 26b, 30a, 30b) bestehen.

11. Verdeckkasten nach Anspruch 10, **dadurch gekennzeichnet, daß** die Profile (26a, 26b, 30a, 30b) Rohrabschnitte sind.

12. Verdeckkasten nach einem der vorangehenden Ansprüche, **dadurch gekennzeichnet, daß** die Spannrolle (26) mittels eines umlaufenden Bowdenzuges manuell, elektrisch oder hydraulisch antreibbar ist.

## Claims

1. A hood compartment (14) for accommodating a folding hood or folding roof (16) of convertible vehicles, roadsters and the like, said hood compartment (14) comprising a separating device (12), for at least partial separation of an additional space, and a transferring unit by means of which the separating device (12) can be moved between a hood-receiving position, in which the hood compartment (14) is enlarged by said additional space, and a luggage receiving position in which the additional space forms part of a boot (18), said separating device (12) comprising a flexible material web with tensile strength whose front and rear ends, which extend transversely with respect to the direction of travel F, are fixed in a stationary manner,
**characterised in that**
the transferring unit comprises a tension roller (26) for the material web and two guides (28) for the tension roller (26) which are arranged on both sides in the direction of travel F and are parallel to each other and in which the tension roller (26) can be moved in the additional space between a forward, upper position, as seen in the direction of travel F, with the material web in the hood-receiving position, and a rear, lower position, as seen in the direction of travel F, with the material web in the luggage-receiving position.

2. The hood compartment according to claim 1, **characterised in that** the guides (28) are rectilinear.

3. The hood compartment according to claim 2, **characterised in that** the guides (28) are each arranged such that they can be pivoted by their rear ends, as seen in the direction of travel F.

4. The hood compartment according to claim 3, **characterised in that** the guides (28) can be pivoted by means of a peripheral Bowden cable manually, electrically or hydraulically.

5. The hood compartment according to claim 1, **characterised in that** the guides (28) have a curved shape.

6. The hood compartment according to any one of the preceding claims, **characterised in that** the tension roller (26) consists of two spaced-apart profiles (26a, 26b) and the material web is passed through the gap between the profiles (26a, 26b).

7. The hood compartment according to claim 6, **characterised in that** the profiles (26a, 26b) are connected with each other at their front ends.

8. The hood compartment according to any one of the preceding claims, **characterised in that** the front and rear ends of the material web are each fixed to the vehicle body by a holding roller (20, 22).

9. The hood compartment according to claim 8, **characterised in that** the holding rollers (20, 22) are rotatably mounted on the vehicle body.

10. The hood compartment according to any one of claims 8 to 9, **characterised in that** the tension roller (26) and the holding rollers (20, 22) consist of identical profiles (26a, 26b, 30a, 30b).

11. The hood compartment according to claim 10, **characterised in that** the profiles (26a, 26b, 30a, 30b) are tube segments.

12. The hood compartment according to any one of the preceding claims, **characterised in that** the tension roller (26) can be driven by means of a peripheral Bowden cable manually, electrically or hydraulically.

## Revendications

1. Compartiment de capote (14) destiné à recevoir une capote pliante ou un toit pliant (16) d'un cabriolet, roadster ou similaire, ledit compartiment de capote (14) comprenant un dispositif de séparation (12), destiné à séparer au moins partiellement un espace additionnel, et un dispositif de transfert au moyen duquel le dispositif de séparation (12) peut être déplacé entre une position de réception de capote, dans laquelle le compartiment de capote (14) est élargi par ledit espace additionnel, et une position de réception de bagages dans laquelle ledit espace additionnel fait partie d'un coffre à bagages (18), ledit dispositif de séparation (12) comprenant une bande de matériau flexible et résistante à la traction, dont les extrémités avant et arrière, qui s'étendent en direction transversale par rapport à la direction de marche F, sont fixées de manière stationnaire,
**caractérisé en ce que**
le dispositif de transfert comprend un galet tendeur (26) pour la bande de matériau et deux guides (28) pour le galet tendeur (26) qui sont disposés des deux côtés en direction de marche F et sont parallèles l'un à l'autre et dans lesquels le galet tendeur (26) peut être déplacé dans ledit espace additionnel entre une position situé en avant et en haut par rapport à la direction de marche F, dans laquelle position la bande de matériau se trouve dans la position de réception de capote, et une position situé en arrière et en bas par rapport à la direction de marche F, dans laquelle position la bande de matériau se trouve dans la position de réception de bagages.

2. Compartiment de capote selon la revendication 1, **caractérisé en ce que** les guides (28) sont rectilignes.

3. Compartiment de capote selon la revendication 2, **caractérisé en ce que** les guides (28) sont chacun disposés de manière à basculer à leurs extrémités arrières par rapport à la direction de marche F.

4. Compartiment de capote selon la revendication 3, **caractérisé en ce que** les guides (28) peuvent être basculés au moyen d'un câble Bowden périphérique de manière manuelle, électrique ou hydraulique.

5. Compartiment de capote selon la revendication 1, **caractérisé en ce que** les guides (28) présentent une forme courbe.

6. Compartiment de capote selon l'une quelconque des revendications précédentes, **caractérisé en ce que** le galet tendeur (26) est constitué de deux profils écartés (26a, 26b) et la bande de matériau est passée à travers l'interstice entre les profils (26a, 26b).

7. Compartiment de capote selon la revendication 6, **caractérisé en ce que** les profils (26a, 26b) sont reliés l'un à l'autre par leurs fronts.

8. Compartiment de capote selon l'une quelconque des revendications précédentes, **caractérisé en ce que** les extrémités avants et arrières de la bande de matériau sont fixées à la carrosserie par un galet de maintien (20, 22).

9. Compartiment de capote selon la revendication 8, **caractérisé en ce que** les galets de maintien (20, 22) sont montés à la carrosserie de manière rotative.

10. Compartiment de capote selon l'une quelconque des revendications 8 à 9, **caractérisé en ce que** le galet tendeur (26) et les galets de maintien (20, 22) sont constitués de profils identiques (26a, 26b, 30a, 30b).

11. Compartiment de capote selon la revendication 10, **caractérisé en ce que** les profils (26a, 26b, 30a, 30b) sont des segments de tuyau.

12. Compartiment de capote selon l'une quelconque des revendications précédentes, **caractérisé en ce que** le galet tendeur (26) peut être entraîné au moyen d'un câble Bowden périphérique, de manière manuelle, électrique ou hydraulique.
